# EUROPÄISCHE PATENTSCHRIFT

(11) **EP 3 898 454 B1**
(45) Veröffentlichungstag und Bekanntmachung des Hinweises auf die Patenterteilung: **29.11.2023**
(21) Anmeldenummer: 19817666.1
(22) Anmeldetag: 09.12.2019
(51) Int. Cl.: B65G 1/04

(54) **LAGER- UND KOMMISSIONIERSYSTEM UND VERFAHREN ZUM KONFIGURIEREN EINES FAHRZEUGS**
STORAGE AND PICKING SYSTEM AND METHOD FOR CONFIGURING A VEHICLE
SYSTÈME DE STOCKAGE ET DE PRÉPARATION DE COMMANDES ET PROCÉDÉ DE CONFIGURATION D'UN VÉHICULE

(30) Priorität: 19.12.2018 DE 102018132814
(43) Veröffentlichungstag der Anmeldung: 27.10.2021
(73) Patentinhaber: SSI Schäfer Automation GmbH (DE), 97232 Giebelstadt (DE)
(72) Erfinder: FACKELMANN, Martin, 97357 Prichsenstadt (DE)
(74) Vertreter: Witte, Weller & Partner Patentanwälte mbB
(86) Internationale Anmeldenummer: PCT/EP2019/084151
(87) Internationale Veröffentlichungsnummer: WO 2020/126588

(56) Entgegenhaltungen:
- DE-A1-102014 108 453
- US-A1- 2013 245 810
- US-A1- 2016 297 610

## Beschreibung

Die vorliegende Erfindung betrifft ein Verfahren zum, insbesondere erstmaligen, Konfigurieren eines Fahrzeugs aus einer Vielzahl von Fahrzeugen in einem Lager- und Kommissioniersystem, indem dem Fahrzeug zu der zugehörigen Fahrzeug-ID (logische Adresse), das zu konfigurieren ist, eine spezifische Ortsadresse (physikalische Adresse) durch eine Systemsteuerung zugewiesen wird. Ferner betrifft die vorliegende Erfindung ein entsprechendes Lager- und Kommissioniersystem, das eine Systemsteuerung aufweist, die eingerichtet ist, dieses Verfahren auszuführen.

Insbesondere geht es darum, die Konfiguration des Fahrzeugs "sicher" durchzuführen. Eine "sichere Konfiguration" bedeutet, dass ein Fahrzeug, das neu bzw. erstmalig in das Lager- und Kommissioniersystem eingebunden werden soll, sich auch tatsächlich an dem Ort (z.B. in einer Fahrebene einer Regalgasse) befindet, in der sich das Fahrzeug auch befinden soll. Dies ist wichtig, um später eine Verletzungsgefahr für Personen sicher ausschließen zu können, die sich innerhalb des Systems bewegen, weil sich die Fahrzeuge bewegen.

Bei der erstmaligen Inbetriebnahme des Fahrzeugs im Lager- und Kommissioniersystem kann es zu Fehlern kommen, insbesondere wenn Menschen für die Inbetriebnahme der Fahrzeuge eingesetzt werden, wie es üblicherweise der Fall ist, und wenn das Lager- und Kommissioniersystem derart komplex ausgestaltet ist, dass das Fahrzeug an einer sehr großen - und damit unüberschaubaren und verwirrenden - Anzahl von Orten innerhalb des Lager- und Kommissioniersystems in Betrieb genommen werden kann.

Exemplarisch stelle man sich eine Regalanordnung vor, die eine Vielzahl von horizontal nebeneinander angeordneten Regalgassen umfasst, wobei jede der Regalgassen eine Vielzahl von vertikal übereinander angeordneten Regal- bzw. Lagerebenen umfasst. Jede der Regalebenen kann durch ein eigenes, d.h. regalebenenspezifisches, Regalbediengerät zum Zwecke der Einlagerung und Auslagerung von Lagergütern betrieben werden. In diesem Fall spricht man von Einebenen-Regalbediengeräten, die auch als "Shuttle" bezeichnet werden.

Bei der Inbetriebnahme der Regalanordnung kann die Bedienperson z.B. die Aufgabe bekommen, ein Shuttle in der dreizehnten Regalebene der fünften Regalgasse in Betrieb zu nehmen. Bei diesem Vorgang (Initialkonfiguration des Fahrzeugs bzw. Zuweisung von physikalischer und logischer Adresse des Fahrzeugs) muss sichergestellt werden, dass das Shuttle auch tatsächlich in der dreizehnten Ebene der fünften Gasse positioniert ist und dort in Betrieb genommen wird. In diesem Fall kann es leicht passieren, dass das Shuttle versehentlich z.B. in die zwölfte Regalebene der fünften Regalgasse oder in die dreizehnte Regalebene der vierten Gasse eingesetzt wird und dann vermeintlich als Shuttle in der dreizehnten Regalebene der fünften Gasse konfiguriert und in Betrieb genommen wird.

Im Stand der Technik ist es bekannt, die Regalgassen und die jeweiligen Regalebenen eindeutig zu identifizieren. Jede der Regalgassen und jede der jeweiligen Regalebenen kann z.B. mit einem entsprechenden (eindeutigen) Strichcode versehen sein, den die Bedienperson mit einem Handscanner einliest, um der Systemsteuerung mitzuteilen, wo sich die Bedienperson gerade aufhält bzw. wo die Inbetriebnahme stattfinden soll. Dieser Scanvorgang ist fehleranfällig. Die Bedienperson kann z.B. eine Regalebene scannen, die sich unmittelbar oberhalb oder unterhalb der beabsichtigten Regalebene befindet. Eine weitere Fehlerquelle ist darin zu sehen, dass die Bedienperson das Shuttle - trotz richtig eingelesener Regalebene - in die falsche Regalebene einsetzt. Derartige Fehler sind durch die übergeordnete Systemsteuerung nicht verifizierbar.

Das Dokument US 2016/ 297 610 A1 offenbart, gemäß seiner Zusammenfassung, ein Regallagersystem bestehend aus einem Lagerregal mit Lagerregalen mit Lagerplätzen für Artikel in übereinander liegenden Regalstufen mit einer dazwischen verlaufenden Regalgasse. Entlang der Regalgasse verlaufen mehrere Führungsschienen mit ersten und zweiten Führungsschienen. Erste und zweite Förderfahrzeuge sind auf den Führungsbahnen verfahrbar, wobei jedes der Förderfahrzeuge mit einem Antriebsmotor und einer elektronischen Steuereinheit versehen ist und unabhängig voneinander steuerbar ist. Die erste Führungsschiene ist mit einer ersten Fahrleitungsanordnung und die zweite Führungsschiene ist mit einer zweiten Fahrleitungsanordnung ausgestattet, wobei jede der Fahrleitungsanordnungen dedizierte Kontaktleitungen umfasst. Zur Energie- und/oder Datenversorgung kontaktieren Stromabnehmer des ersten Förderwagens die Fahrleitungen der ersten Fahrleitungsanordnung und Stromabnehmer des zweiten Förderwagens kontaktieren Fahrleitungen der zweiten Fahrleitungsanordnung. Der erste Förderwagen und der zweite Förderwagen können gleichzeitig und unabhängig voneinander auf derselben Förderbahn bewegt werden.

Das Dokument US 2013/ 245 810 A1 offenbart, gemäß seiner Zusammenfassung, ein automatisches Lager- und Entnahmesystem, das eine Lagerstruktur mit Lagerregalen mit einer Ablagefläche umfasst, die so konfiguriert ist, dass sie Kasteneinheiten trägt, wobei eine Position jeder Kasteneinheit für jeden Lagerort auf den Lagerregalen nicht deterministisch ist, wobei jede Kasteneinheit eine vorbestimmte Lagerposition hat und wobei eine Steuerung konfiguriert ist, die vorbestimmte Lagerposition zu bestimmen, wobei ein Kommissioniergang konfiguriert ist, einen Zugriff auf die Kasteneinheiten innerhalb der Lagerstruktur zu ermöglichen, und ein Wiederherstellungssystem für seismische Störungen, das Bewegungssensoren für seismische Störungen, die an den Lagerregalen angeordnet sind, angeordnet sind, ein Steuermodul für seismische Störungen, das in Kommunikation mit den seismischen Störungssensoren steht und das konfiguriert ist, eine seismischen Störung zu identifzieren, und eine automatisierte Kasteneinheiten-Abbildungseinrichtung umfasst, die konfiguriert ist, den Kommissioniergang zu durchqueren, wobei die automatisierte Kasteneinheiten-Abbildungseinrichtung in Kommunikation mit dem seismischen Störungssteuermodul steht und von diesem initialisiert wird, um eine Ablageposition von zumindest einer Kasteneinheit innerhlab der Lagerstruktur zu identifizieren.

Das Dokument DE 10 2014 108 453 A1 offenbart, gemäß seiner Zusammenfassung, ein Lagersystem, welches zumindest eine Station, wie eine Wareneinlagerungs-, Warenumlagerungs-, Warenkommissionierungs- oder Warenauslagerungsstation, und ein Regallager mit einer Vielzahl von nebeneinander und/oder übereinander angeordneten Lagerplätzen für die Lagerung von Waren umfasst. Das Lagersystem umfasst des Weiteren mindestens ein Warentransportfahrzeug, das mindestens eine Ware von der Station zu dem Lagerplatz oder umgekehrt transportiert, wobei der Transport erfolgt, ohne dass ein Umladen der Ware auf ein anderes Warentransportfahrzeug oder ein anderes Transportmittel erfolgt.

Es ist daher eine Aufgabe der vorliegenden Erfindung, ein Lager- und Kommissioniersystem und ein Verfahren zum Konfigurieren eines Fahrzeugs vorzusehen, das sicher ist.

Diese Aufgabe wird gelöst durch Verfahren zum sicheren Konfigurieren eines Fahrzeugs aus einer Vielzahl von Fahrzeugen in einem Lager- und Kommissioniersystem, indem dem Fahrzeug, das zu konfigurieren ist, eine spezifische Ortsadresse durch eine Systemsteuerung zugewiesen wird, wobei das Lager- und Kommissioniersystem aufweist: die Systemsteuerung; die Vielzahl von Fahrzeugen; und eine Vielzahl von ortsgebundenen, stationären Stationen; wobei sich jede der Stationen an einem anderen vorbekannten Ort innerhalb des Lager- und Kommissioniersystems befindet, wobei jedem der vorbekannten Orte eine spezifische Ortsadresse zugewiesen ist, wobei jeder der spezifischen Ortsadressen ein Fahrbereich innerhalb des Lager- und Kommissioniersystems zugewiesen ist, in welchem sich die die Fahrzeuge bewegen dürfen; wobei jede der Stationen eingerichtet ist, ein spezifisches Zustandssignal zu erzeugen und das spezifische Zustandssignal an die Systemsteuerung zu übermitteln, wobei das spezifische Zustandssignal einen Zustand der entsprechenden Station repräsentiert, und wobei sich der Zustand der entsprechenden Station aufgrund einer Interaktion zwischen einem der Fahrzeuge und der entsprechenden Station ändert; wobei jede der Stationen eine spezifische Stations-ID aufweist, die einer spezifischen logischen Adresse entspricht; wobei jedes Fahrzeug eine Fahrzeugsteuerung und eine spezifische Fahrzeug-ID, die einer spezifischen logischen Adresse entspricht, aufweist; wobei das Verfahren die Schritte aufweist: Auswählen des Fahrzeugs, das zu konfigurieren ist, aus der Vielzahl der Fahrzeuge; Auswählen einer Station aus der Vielzahl von Stationen , wo das ausgewählte Fahrzeug betrieben werden soll; Positionieren des ausgewählten Fahrzeugs in der ausgewählten Station; Veranlassen, durch die Systemsteuerung, dass das ausgewählte Fahrzeug eine charakteristische Interaktion mit der Station durchführt, in der das ausgewählte Fahrzeug positioniert ist, während nicht ausgewählte Fahrzeuge Interaktionen mit Stationen durchführen dürfen, in denen das ausgewählte Fahrzeug nicht positioniert ist; Sammeln, durch die Systemsteuerung, von spezifischen Zustandssignalen, die während einer Durchführung der charakteristischen Interaktion durch die Stationen übermittelt werden;
Ermitteln, durch die Systemsteuerung, eines charakteristischen spezifischen Zustandsignals aus den gesammelten spezifischen Zustandssignalen, wobei das charakteristische spezifische Zustandssignal nur durch die charakteristische Interaktion hervorrufbar ist; Ermitteln, durch die Systemsteuerung , der Station, die das charakteristische spezifische Zustandssignal übermittelt hat; und Zuweisen der spezifischen Ortsadresse der ausgewählten Station zu der Fahrzeug-ID des ausgewählten Fahrzeugs für den Fall, dass die spezifische Ortsadresse der ermittelten Station, die das charakteristische spezifische Zustandssignal übermittelt hat, mit der spezifischen Ortsadresse der ausgewählten Station übereinstimmt.

Durch dieses Verfahren ist sichergestellt, dass das zu konfigurierende Fahrzeug an dem Ort in Betrieb genommen wird, der beabsichtigt ist. Eine Fehlzuordnung zwischen der physikalischen und der logischen Adresse des Fahrzeugs ist sicher ausgeschlossen, weil die Systemsteuerung durch Rückmeldungen der Stationen überprüft, ob das Fahrzeug am richtigen Ort ist. Die Rückmeldung erfolgt nicht durch eine Dateneingabe durch eine Bedienperson.

Ferner ist es möglich, dass die anderen Fahrzeuge, die bereits konfiguriert sind, während der Inbetriebnahme des Fahrzeugs weiterhin betrieben werden können, sofern nicht Sicherheitsvorschriften dagegen sprechen. Die Systemsteuerung ist trotz des Betriebs der anderen Fahrzeuge in der Lage, die Zuordnung richtig vorzunehmen, weil das charakteristische Zustandssignal nur von dem zu konfigurierenden Fahrzeug erzeugbar ist und von den anderen Zustandsignalen eindeutig und sicher unterscheidbar ist.

So ist es z.B. möglich den Zutrittsbereich in einer Regalgasse betrieblich stillzusetzen, in welchem die Inbetriebnahme des Fahrzeugs erfolgt, während die restlichen Zutrittsbereiche in der gleichen Gasse, weiterhin im Betrieb sind. Dies bedeutet, dass die Fahrzeuge in den anderen Zutrittsbereich weiterarbeiten, während nur ein kleinerer Teil der Regalgasse stillsteht.

Ferner ist es bevorzugt, wenn der Schritt des Auswählens der Station durch eine Bedienperson oder durch die Systemsteuerung durchgeführt wird. Insbesondere kann auch der Schritt des Auswählens des Fahrzeugs durch die Bedienperson oder durch die Systemsteuerung durchgeführt werden.

Es ist egal, wer vorgibt, welches Fahrzeug an einem Ort zu installieren ist. Die Wahl kann von der Steuerung oder dem Menschen getroffen werden.

Vorzugsweise wird der Schritt des Positionierens des ausgewählten Fahrzeugs in der ausgewählten Station durch eine Bedienperson durchgeführt, wobei die Systemsteuerung zuvor insbesondere veranlasst, dass sich Fahrzeuge, die bereits konfiguriert sind, in eine zugehörige Station bewegen und dort verharren, bis die Konfiguration des ausgewählten Fahrzeugs abgeschlossen ist.

Wenn die anderen Fahrzeuge während der Positionierung des zu konfigurierenden Fahrzeugs in ihren Stationen verweilen, ist eine Kollision mit der Bedienperson ausgeschlossen.

Ferner kann das Verfahren die folgenden Schritte aufweisen: Herstellen einer, vorzugsweise physischen, Datenverbindung zwischen der Fahrzeugsteuerung des ausgewählten Fahrzeugs und einem Datenterminal, das die Bedienperson mit sich führt; und Informieren der Systemsteuerung durch das Datenterminal, dass das ausgewählte Fahrzeug zur Durchführung der charakteristischen Interaktion veranlasst werden kann, wobei der Systemsteuerung insbesondere die Fahrzeug-ID des ausgewählten Fahrzeugs mitgeteilt wird; wobei das Datenterminal eine Anzeige und eine Eingabeeinrichtung aufweist und wobei das Datenterminal ferner eingerichtet ist, der Bedienperson eine Konfigurationsmaske anzuzeigen, über die die Bedienperson Konfigurationsdaten für das ausgewählte Fahrzeug, insbesondere die entsprechende Fahrzeug-ID oder eine spezifische Ortsadresse, auswählen und eingeben kann.

Die Verbindung ermöglicht es, dass die Bedienperson die charakteristische Interaktion unter der Führung der Systemsteuerung durchführt. Dies kann insbesondere für das Timing von Vorteil sein, weil die Bedienperson rückmelden kann, in welchem Zustand sich das zu konfigurierende Fahrzeug (z.B. "in Station positioniert", "Entladewiderstand eingesteckt", "Entladung erfolgt", "Ein-/Auslagersequenz initiiert", oder dergleichen) befindet. Dies kann die Systemsteuerung bei Analyse der empfangenen Zustandssignale unterstützen, insbesondere bei der zeitlichen Zuordnung.

Weiter ist es vorteilhaft, wenn die Fahrzeuge flurgebundene fahrerlose Transportfahrzeuge und/oder regalgebundene Regalbediengeräte sind, die zur Bedienung einer, vorzugsweise einzigen, Regalebene einer Vielzahl von übereinander angeordneten Regalebenen eingerichtet sind.

Ferner ist es bevorzugt, wenn: zumindest das ausgewählte Fahrzeug, und insbesondere jedes der Fahrzeuge, einen elektrischen Energiespeicher aufweist; die Stationen elektrische Ladestationen zum Laden des Energiespeichers des ausgewählten Fahrzeugs sind; Fahrzeuge, die den elektrischen Energiespeicher aufweisen, eingerichtet sind, in den Ladestationen elektrisch aufgeladen zu werden; die spezifischen Zustandssignale Ladeströme oder Ladespannungen repräsentieren; und die charakteristische Interaktion ein Entladen des Energiespeichers des ausgewählten Fahrzeugs und ein Wiederaufladen in einer der Ladestationen umfasst.

Hier repräsentiert die charakteristische Interaktion einen Entlade- und anschließenden Ladevorgang eines autonom, weil ohne permanente Energieversorgung, betriebenen Fahrzeugs, wobei der charakteristische Zustand ein spezieller Ladestrom oder eine spezielle Ladespannung ist, die eindeutig aus allen anderen Ladeströmen bzw. -spannungen erkennbar sind.

In diesem Zusammenhang ist es von Vorteil, wenn das Entladen des Energiespeichers des ausgewählten Fahrzeugs ein, insbesondere vorübergehendes, Installieren eines Entladewiderstands im ausgewählten Fahrzeug durch die Bedienperson umfasst.

Auf diese Weise wird sichergestellt, dass das der Energiespeicher auf ein Niveau entladen wird, das tiefer als das aller anderen Fahrzeuge ist. Dadurch stellt sich beim Laden der signifikante Ladestrom ein.

Weiter ist es bevorzugt, wenn das Wiederaufladen nach dem Ablauf eines Timers begonnen wird, der so eingestellt ist, dass der Energiespeicher des ausgewählten Fahrzeugs unter einen vorab definierten Schwellenwert entladen ist.

Das Einstecken des Entladewiderstandes wird zeitlich mit dem Start des Timers verknüpft. So ist sichergestellt, dass der Energiespeicher unter den gewünschten Schwellenwert entladen wird, so dass sich der gewünschte Ladestrom auf jeden Fall einstellt.

Ferner ist es von Vorteil, wenn: das ausgewählte Fahrzeuge, und insbesondere jedes der Fahrzeuge, ein Lastaufnahmemittel aufweist; die Stationen mit Lichtschranken versehene, vorzugsweise regalintegrierte, Lagergut-Übergabestationen sind; jedes der Lastaufnahmemittel eingerichtet ist und die Lichtschranken so angeordnet sind, dass die Lichtschranken in einem ausgefahrenen Zustand der Lastaufnahmemittel unterbrochen werden und dass die Lichtschranken in einem eingezogenen Zustand der Lastaufnahmemittel nicht unterbrochen werden; die spezifischen Zustandssignale angeben, ob und wie lange die entsprechenden Lichtschranken unterbrochen sind; und die charakteristische Interaktion ein Ausfahren und Einfahren des Lastaufnahmemittels des ausgewählten Fahrzeugs in einer vorab definierten, charakteristischen Sequenz umfasst.

Die Ein/Auslagerungssequenz stellt eine Alternative zum Ladestrom dar, die sich eindeutig erkennen lässt, selbst wenn alle Lagerplätze mit Lichtschranken versehen sind. Diese Sequenz wird so gewählt, dass sie sich von "normalen" Ein- und Auslagerungsvorgängen deutlich unterscheidet.

Insbesondere entsprechen die spezifischen logischen Adressen der Stationen den Stations-IDs und die spezifischen logischen Adressen der Fahrzeuge entsprechen den Fahrzeug-IDs.

Ferner können die spezifischen logischen Adressen der Stationen spezifischen Netzwerk-Adressen der Stationen entsprechen und die spezifischen logischen Adressen der Fahrzeuge können spezifischen Netzwerk-Adressen der Fahrzeuge entsprechen.

Außerdem wird die Aufgabe durch ein Lager- und Kommissioniersystem nach Anspruch 13, mit einer Systemsteuerung, einer Vielzahl von Fahrzeugen und einer Vielzahl von Stationen gelöst, wobei die Systemsteuerung eingerichtet ist, das Verfahren nach einem der vorhergehenden Ansprüche auszuführen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Es zeigen:
- Fig. 1: ein Blockdiagramm eines Lager- und Kommissioniersystems;
- Fig. 2: ein Blockdiagramm eines Fahrzeugs, einer Systemsteuerung und einer Station;
- Fig. 3: eine Regalanordnung in perspektivischer Darstellung (Fig. 3A) und in Frontalansicht (Fig. 3B);
- Fig. 4: eine Konfigurationstabelle;
- Fig. 5: einen Graphen zur Verdeutlichung von Zustandssignalen; und
- Fig. 6: ein Flussdiagramm eines Verfahrens zum Konfigurieren eines Fahrzeugs.

Die vorliegende Erfindung kommt vorzugsweise in intralogistischen Systemen zum Einsatz. Die Erfindung eröffnet die Möglichkeit, eine (sichere) Zuordnung zwischen physikalischen Adressen und logischen Adressen (z.B. IP-Adressen) von Entitäten, insbesondere Fahrzeugen, des intralogistischen Systems vorzunehmen.

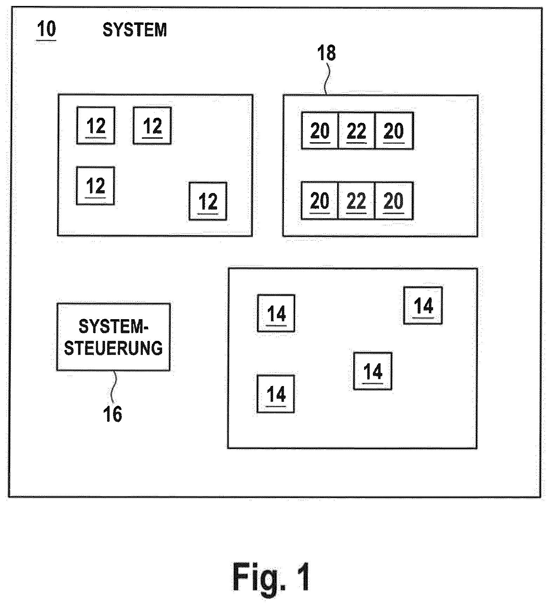

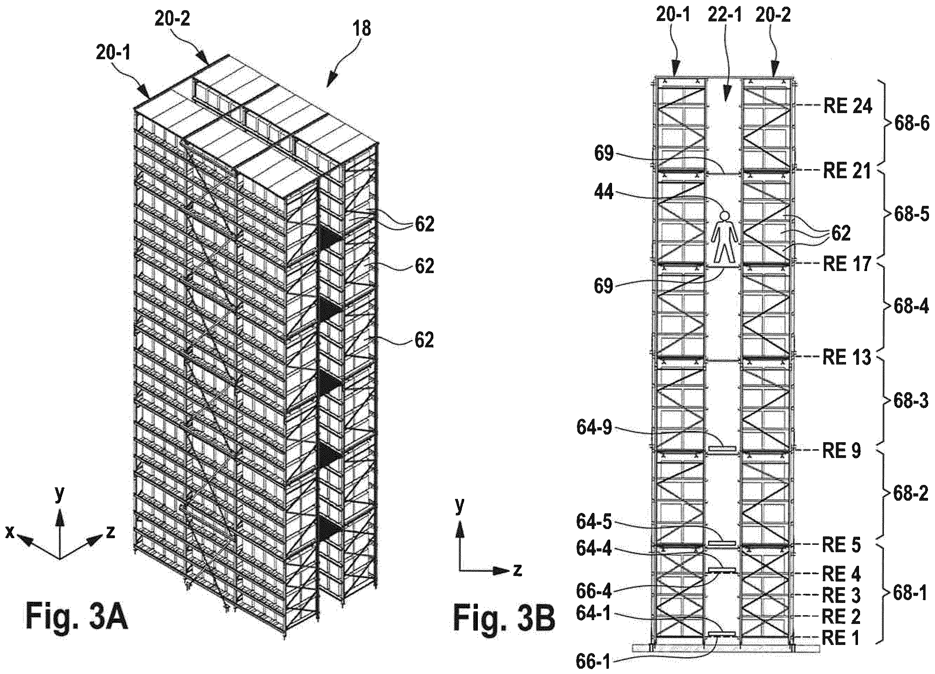

Fig. 1 zeigt ein Blockdiagramm eines Lager- und Kommissioniersystems (nachfolgend auch kurz bezeichnet als "System") 10. Das System 10 weist eine Vielzahl von Fahrzeugen 12, eine Vielzahl von Stationen 14 und eine Systemsteuerung 16 auf. Das System 10 kann ferner eine Regalanordnung 18 mit Regalen 20 aufweisen, die (nicht dargestellte) Regalgassen 24 zwischen sich definieren (vgl. Fig. 3), wie es bekannt ist.

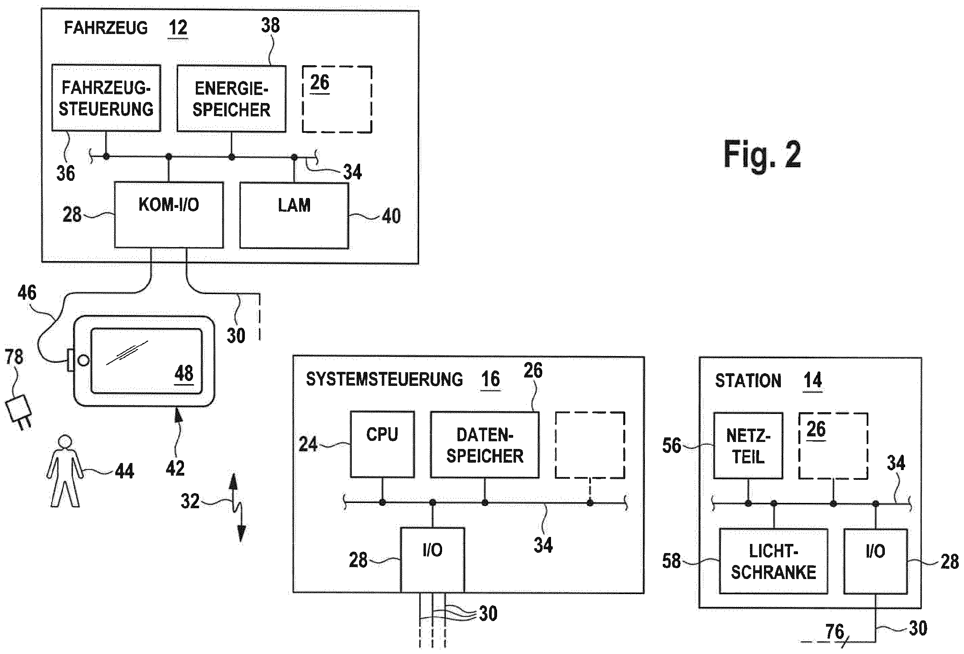

Fig. 2 zeigt ein Blockdiagramm der Systemsteuerung 16. Die Systemsteuerung 16 umfasst eine oder mehrere Datenverarbeitungseinrichtungen 24, einen oder mehrere Datenspeicher 26 sowie eine oder mehrere Schnittstellen (I/O) 28, um mit Entitäten des Systems 10, wie z.B. mit den Fahrzeugen 12 und den Stationen 14, datentechnisch zu kommunizieren. Die Kommunikation erfolgt über feste Leitungen 30 und/oder drahtlose Verbindungen 32.

Die Systemsteuerung 16 kann zentral oder dezentral implementiert sein. Die Systemsteuerung 16 kann eine oder mehrere der folgenden Funktionen implementieren: eine Lagerverwaltung, insbesondere Lagerplatzverwaltung; eine Mengenverwaltung (Bestandsführung); eine Materialflusssteuerung; eine Datenerfassung, -aufbereitung und -visualisierung; Kommissionierstrategien; Optimierungen (z.B. bezüglich Transport, Kommissionierreihenfolge, Routenplanung, Batchbildung und dergleichen); und Ähnliches.

Die Datenverarbeitungseinrichtung 24, der Speicher 26 und die Schnittstelle 28 sind z.B. über ein Bussystem 34 miteinander verbunden.

Fig. 2 zeigt ferner exemplarisch ein (einzelnes) Fahrzeug 12. Die nachfolgende Beschreibung gilt generell auch für mehrere Fahrzeuge12. Jedes Fahrzeug 12 des Systems 10 weist eine Fahrzeugsteuerung 36 und eine Kommunikationsschnittstelle 28 auf. Optional können die Fahrzeuge 12 einen Energiespeicher 38 (z.B. Akku, Kondensator, PowerCap, etc.) aufweisen. Die Fahrzeuge 12 können aber auch permanent an eine Energieversorgungsleitung (nicht dargestellt) gekoppelt sein. Ferner können die Fahrzeuge 12 jeweils ein Lastaufnahmemittel (LAM) 40 aufweisen.

Es versteht sich, dass jedes der Fahrzeuge 12 weitere Komponenten aufweisen kann, wie z.B. einen Fahrantrieb, Räder, ein Gestell, Sensoren, einen Datenspeicher 26 und dergleichen, die hier zur Vereinfachung der Darstellung aber nicht näher betrachtet werden.

Die Kommunikationsschnittstelle 28 des Fahrzeugs 12 ist mit der Schnittstelle 28 der Systemsteuerung 16 verbindbar. Die Schnittstelle 28 des Fahrzeugs 12 ist ferner eingerichtet, mit einem Datenterminal 42 (z.B. Laptop, Tablet-PC, mobiles Datenterminal, oder dergleichen) verbunden zu werden. Das Datenterminal 42 ist eine tragbare Einheit, die von einer Bedienperson (z.B. einem Wartungstechniker) mit sich getragen wird. In der Fig. 2 ist das Datenterminal 42 z.B. über ein Kabel 46 mit der Schnittstelle 28 des Fahrzeugs 12 physisch verbunden. Es versteht sich, dass diese Verbindung auch in Form einer Drahtlosverbindung 32 (z.B. WiFi) erfolgen kann.

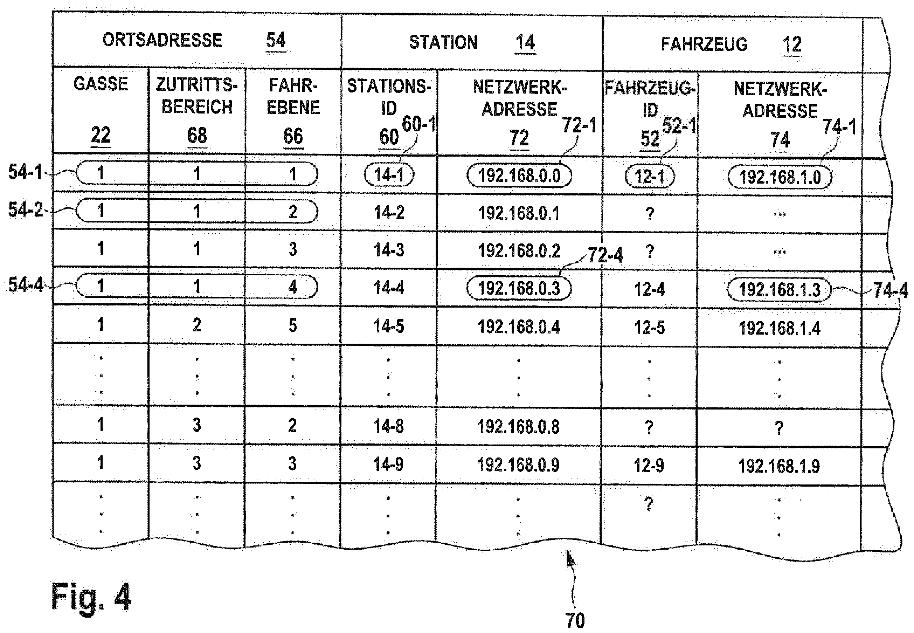

Das Datenterminal 42 weist vorzugsweise eine visuelle Anzeige 48 und eine (nicht näher gezeigte) Eingabeeinrichtung 50 (z.B. Tastatur, Mikrofon, Touch-Panel, oder dergleichen) auf. Über die Anzeige 48 kann der Bedienperson 44 eine Konfigurationsmaske angezeigt werden, mit deren Hilfe die Bedienperson 44 Konfigurationsdaten, wie z.B. eine Fahrzeug-ID 52 (vgl. Fig. 4), d.h. eine fahrzeugspezifische Kennung, eine spezifische Ortsadresse 54 (vgl. Fig. 4), d.h. eine ortsspezifische bzw. physikalische Adresse, und dergleichen, auswählen und eingeben kann, wie es nachfolgend unter Bezugnahme auf Fig. 4 noch näher erläutert werden wird.

Ferner ist in der Fig. 2 exemplarisch eine Station 14 gezeigt. Es sind mehr als eine Station 14 im System 10 vorgesehen. Die Station 14 weist ebenfalls eine (Kommunikations-) Schnittstelle 28 auf, um mit den Schnittstellen 28 der Systemsteuerung 16 und/oder der Fahrzeuge 12 zu kommunizieren, d.h. um Daten auszutauschen. Jede Station 14 kann optional ein Netzteil 56, eine Lichtschranke 58 und/oder andere Sensoren und/oder Aktoren aufweisen.

Jeder Station 14 ist eine (hier nicht gezeigte) Stations-ID 60 (vgl. Fig. 4), d.h. eine stationsspezifische Kennung, zugeordnet. Die Stations-ID 60 kann in einem (Daten-) Speicher 26 der Station 14 hinterlegt sein, so wie die Fahrzeug-ID 52 in einem Speicher 26 der Fahrzeuge 12 hinterlegt sein kann.

Fig. 3 zeigt eine exemplarische Regalanordnung 18 der Fig. 1 in einer perspektivischen Ansicht (Fig. 3A) und in einer Frontalansicht (Fig. 3B). Die nachfolgende Beschreibung der Regalanordnung 18 erfolgt unter gleichzeitiger Bezugnahme auf die Fig. 3A und 3B. Ferner ist ein kartesisches Koordinatensystem XYZ gezeigt, wobei X eine Längsrichtung, Y eine Höhenrichtung und Z eine Querrichtung bezeichnet, wie in der Intralogistik üblich. Die Regalanordnung 18 ist exemplarisch aus zwei Regalen 20-1 und 20-2 gebildet, die in der Querrichtung Z zwischen sich eine Regalgasse 22 definieren, die sich in der Längsrichtung X und der Höhenrichtung Y längs den Regalen 20-1 und 20-2 erstreckt. Die Regale 20-1 und 20-2 sind ausgelegt, Lagergüter 62 jeweils doppeltief hintereinander (in der Richtung Z) aufzunehmen. Die Lagergüter 62 können beliebig tief gelagert werden.

Exemplarisch weist jedes der Regale 20-1 und 20-2 24 Lager- bzw. Regalebenen RE1 bis RE24 auf. Die erste Regalebene RE1 ist z.B. die unterste Regelebene. Die vierundzwanzigste Regalebene RE24 ist z.B. die höchstgelegene Regalebene. Vorzugsweise sind die Regalebenen RE vertikal gleich zueinander beabstandet. Dies bedeutet, dass die vertikale Teilung der Regale 20-1 und 20-2 konstant ist.

Jede der Regalebenen RE wird von einem Regalbediengerät (RBG) bedient. Die RBG sind in der Fig. 3 durch Einebenen-RBG implementiert. Dies bedeutet, dass jede Regalebene RE von einem eigenen RBG bedient wird. Wenn eine Regalebene RE bedient wird, werden ein oder mehrere Lagergüter 62 vom zugehörigen RBG (in der Querrichtung Z) eingelagert oder ausgelagert.

In der Fig. 3 sind die RBG durch Shuttle 64 implementiert. Die RBG bzw. Shuttle 64 stellen eine mögliche Implementierung der Fahrzeuge 12 dar. Exemplarisch sind vier Shuttle 64-1, 64-4, 64-5 und 64-9 gezeigt, die bereits konfiguriert sind. Das Shuttle 64-1 ist der Regalebene RE1 zugeordnet und bewegt sich entlang einer (horizontalen) Fahrebene 66-1, die sich entlang der Regalgasse 22 auf der gleichen Höhe wie die erste Regalebene RE1 erstreckt. In der Fig. 3B ist die Fahrebene 66-1 mit einer Strichlinie angedeutet. Das Shuttle 64-4 ist der vierten Regalebene RE4 zugeordnet und bewegt sich entlang der vierten Fahrebene 66-4. Das Shuttle 64-5 ist der fünften Regalebene RE5 zugeordnet und bewegt sich entlang der fünften Fahrebene 66-5. Das Shuttle 64-9 ist der neunten Regalebene RE9 zugeordnet und bewegt sich entlang der (nicht dargestellten) neunten Fahrebene 66-9.

Die Fig. 3B zeigt eine Situation, in welcher die Regalebenen RE1, RE4, RE5 und RE9 bereits jeweils mit einem Shuttle 64 bestückt wurden. Diese Shuttle 64 sind bereits konfiguriert, d.h. jedes dieser Shuttle 64 hat bereits eine physikalische Adresse zugewiesen bekommen. Die restlichen Regalebenen RE, wie z.B. die Regalebenen RE2 und RE3, wurden noch nicht mit einem Shuttle 64 bestückt.

Die Regalanordnung 18 kann ferner in Zutrittsbereiche 68 unterteilt sein. In der Fig. 3 ist die Regalanordnung 18 z.B. vertikal in exemplarisch sechs Zutrittsbereiche 68-1 bis 68-6 unterteilt. Es versteht sich, dass die Zutrittsbereiche 68 auch entlang der horizontalen Längsrichtung X unterteilt sein könnten.

Die Zutrittsbereiche 68-1 bis 68-6 befinden sich in der Regalgasse 22. Vorzugsweise sind die Zutrittsbereiche 68 innerhalb der Gasse 22 durch (Tritt-)Gitter 69 physisch unterteilt, die es der Bedienperson 44 ermöglichen, die Zutrittsbereiche 68 zu betreten (vgl. Zutrittsbereich 68-5 in Fig. 3B). Die Gitter 69 erstrecken sich insbesondere unterhalb einer untersten Fahrebene 66, die einem jeweiligen Zutrittsbereich 68 zugeordnet ist.

Fig. 4 zeigt eine exemplarische Konfigurations- bzw. Zuordnungstabelle 70, die die Situation der Fig. 3 widerspiegelt. Die Tabelle 70 der Fig. 4 kann im Datenspeicher 26 der Systemsteuerung 16 (vgl. Fig. 1) hinterlegt sein.

Die Tabelle 70 der Fig. 4 umfasst im Wesentlichen drei Informationsgruppen, nämlich Informationen zu (spezifischen) Ortsadressen 54, Informationen zu den Stationen 14 und Informationen zu den Fahrzeugen 12.

Die Fahrzeuge 12 sind in der Fig. 3 z.B. durch die Shuttle 64 implementiert. Die Stationen 14 sind in Fig. 3 nicht gezeigt.

Bei den Stationen 14 könnte es sich z.B. um (nicht näher bezeichnete) Ladestationen handeln, wobei auf jeder Regalebene RE der Fig. 3 eine der Ladestationen vorgesehen ist. Das Vorsehen der Ladestation ist z.B. in dem Fall erforderlich, wenn die Fahrzeuge 12 bzw. die Shuttle 64 mit einem Energiespeicher 38 (vgl. Fig. 1) ausgestattet sind, also ohne permanente Energieversorgung betrieben werden. Um die Energiespeicher 38 wieder zu laden, müssen die Shuttle 66 zu ihren Ladestationen fahren. Die Ladestationen können z.B. (in der Längsrichtung X) am Anfang der jeweiligen Fahrebene 66 vorgesehen sein. Es versteht sich, dass die Ladestationen auch an einem anderen Ort entlang ihrer jeweiligen Fahrebene 66 vorgesehen sein können. Ferner versteht es sich, dass mehr als eine Ladestation pro Fahrebene 66 vorgesehen sein kann. Zur Vereinfachung der nachfolgenden Erläuterung wird davon ausgegangen, dass pro Fahrebene 66 immer nur eine Station 14 vorgesehen ist. Dies bedeutet, dass ein Ort der Stationen 14 fest definiert ist.

Dieser Ort ist in diesem Fall kein Punkt, sondern ein Raum, der sich entlang einer jeweiligen Fahrebene 66 erstreckt. Dabei ist es unerheblich, wo die jeweilige Station 14 entlang der Fahrebene 66 angeordnet ist.

Die Station 14, die der untersten, ersten Fahrebene 66-1 des ersten Zutrittsbereichs 68-1 der ersten Regalgasse 22-1 zugeordnet ist, weist eine spezifische Stations-ID 60 mit dem Inhalt "14-1" auf. Jede Stations-ID 60 ist ein einziges Mal innerhalb des Systems 10 vergeben und bezeichnet die zugehörige Station 14 eineindeutig. Die spezifische Stations-ID 60 selbst stellt bereits eine logische Adresse dar, unter welcher die entsprechende Station 14 von der Systemsteuerung 16 ansprechbar ist. Der ersten Station 14-1 kann ergänzend oder alternativ eine weitere logische Adresse in Form einer (Stations-)spezifischen Netzwerkadresse 72 zugewiesen sein. In der Fig. 4 sind die spezifischen Netzwerkadressen 72 der Stationen 14 z.B. durch (exemplarisch lokale) IP-Adressen implementiert. Die spezifischen Netzwerkadressen 72 der Station 14 umspannen in diesem Fall den Adressbereich "192.168.0.0" bis "192.168.0.255". Um diese lokalen IP-Adressen von anderen lokalen IP-Adressen und anderen Gassen 22 zu unterscheiden, könnte die Gasse 22-1 einen (nicht dargestellten und nicht näher bezeichneten) Controller aufweisen, der wiederum mit einer globalen IP-Adresse verknüpft sein könnte, um die Eindeutigkeit der Adresse wieder herzustellen. Dies bedeutet, dass jede der Gassen 22 des Systems 10 mit einem eigenen Controller versehen sein könnte, um alle Stationen 14 des Systems 10 eindeutig ansprechen zu können.

Zurückkehrend zur Tabelle 70 der Fig. 4 ist der ersten Station 14-1 die spezifische Ortsadresse 54 mit dem Inhalt "111" zugeordnet. Der Inhalt "111" bringt zum Ausdruck, dass sich die Station 14-1 in der ersten Gasse 22-1 innerhalb des ersten Zutrittsbereichs 68-1 in der ersten Fahrebene 66-1 befindet.

Dieser spezifischen Ortsadresse 54-1 ist das erste Fahrzeug 12-1 bzw. das erste Shuttle 64-1 zugeordnet. Das erste Fahrzeug 12-1 weist eine spezifische Fahrzeug-ID 52-1 auf, deren Inhalt "12-1" ist. Generell gilt wiederum, dass auch die Fahrzeug-ID 52 logische Adressen sind. Ergänzend oder alternativ kann dem ersten Fahrzeug 12-1 bzw. dem ersten Shuttle 64-1 auch eine spezifische Netzwerkadresse 74 zugeordnet sein. Im Beispiel der Fig. 4 wird wiederum eine lokale IP-Adresse z.B. aus dem Bereich "192.168.1.0" bis 192.168.1.255" gewählt. Die spezifische Netzwerkadresse 74-1 des ersten Fahrzeugs 12-1 lautet "192.168.1.0".

Vergleicht man die spezifischen Netzwerkadressen 72 der Station 14 mit den spezifischen Netzwerkadressen 74 der Fahrzeuge 12, so unterscheiden sich diese insbesondere in der dritten Position. Bei den Stationen 14 ist diese dritte Position mit "0" bezeichnet, wohingegen die dritte Position der Fahrzeuge 12 mit "1" bezeichnet ist. Es versteht sich, dass diese Auswahl lediglich exemplarisch ist. Üblicherweise werden die logischen Adressen, und insbesondere IP-Adressen, willkürlich vergeben. Die Vergabe erfolgt üblicherweise durch die Systemsteuerung 16.

Im ersten Zutrittsbereich 68-1 der Fig. 3 ist neben der ersten Fahrebene 66-1 des Weiteren die vierte Fahrebene 66-4 bereits mit dem Shuttle 64-4 bzw. dem Fahrzeug 12-4 bestückt. Dies drückt sich in der Tabelle 70 durch den vierten Datensatz bzw. die vierte Zeile von oben aus. Die vierte Zeile umfasst die spezifische Ortsadresse 54-4 (mit dem Inhalt "114"), der die vierte Station 14-4 und das vierte Fahrzeug 12-4 zugeordnet sind. Der vierten Station 14-4 ist die spezifische Netzwerkadresse 72-4 (192.168.0.3) zugeordnet. Dem Fahrzeug 12-4 ist die spezifische Netzwerkadresse 74-4 (192.168.1.3) zugeordnet.

Ähnliches gilt für das Shuttle 64-5 (vgl. fünfte Zeile der Tabelle 70 in Fig. 4) und das Shuttle 64-9 (vgl. neunte Zeile der Tabelle 70 in Fig. 4) der Fig. 3. Der Tabelle 70 der Fig. 4 ist ferner zu entnehmen, dass den restlichen Fahrebenen noch keine Fahrzeuge 12 zugeordnet sind.

Ein Konfigurationsvorgang wird nachfolgend beschrieben werden. Dabei versteht es sich, dass sowohl die Stations-ID 60 als auch die Fahrzeug-ID 52 in der Praxis nicht aufsteigend geordnet in der Tabelle 70 vorliegen werden. In der Praxis wird die Bedienperson 44 (z.B. ein Mechaniker) die Stationen 14 und die Fahrzeuge 12 willkürlich über die Regalebenen RE verteilen.

Ziel der Konfiguration ist es, die Tabelle 70 der Fig. 4 zu vervollständigen, insbesondere jedem Fahrzeug 12 sicher eine spezifische Ortsadresse 54 zuzuweisen. Dies bedeutet insbesondere, dass den Fahrzeugen 12 - sicher - einer der Orte, d.h. eine der spezifischen Ortsadressen 54, zugewiesen werden soll. Dabei wird vorausgesetzt, dass die Zuweisung zwischen den spezifischen Ortsadressen 54 und den Stationen 14 bereits (sicher) erfolgt ist. Dies bedeutet, dass den Stationen 14 bereits sicher ihre jeweiligen Orte bzw. zugeordneten Fahrebenen 66 in Form der spezifischen Ortsadressen 54 zugewiesen wurden.

Die Aufgabe der Bedienperson 44 ist es dann, die (leeren) Fahrebenen 66 mit Fahrzeugen 12 zu bestücken, indem den neu in die Regalgasse 22-1 bzw. in die leeren Fahrebenen 66 eingesetzten Fahrzeugen 12 die richtigen spezifischen Ortsadressen 54 zugeordnet werden.

Die spezifischen Ortsadressen 54 definieren Fahrbereiche bzw. Bewegungsbereiche der Fahrzeuge 12. Generell ist jedem Fahrbereich mindestens eine Station 14 zugeordnet, so dass über die spezifische Ortsadresse 54 der entsprechenden Station 14 eine Zuordnung eines Orts für ein neu in die Gasse 22 eingesetztes Fahrzeug 12 erfolgen kann.

Ausgehend von der Situation, die in der Fig. 3 dargestellt ist, ist es erforderlich, zwei weitere Shuttle 64 in die Fahrebenen 66-2 und 66-3 einzusetzen. Zu diesem Zweck bewegt sich die Bedienperson 44 zum ersten Zutrittsbereich 68-1. Sobald die Bedienperson 44 dort angekommen ist, kann die Bedienperson 44 der (übergeordneten) Systemsteuerung 16 z.B. mittels des mitgeführten Datenterminals 42 signalisieren, dass ein neues Shuttle 64 z.B. in die zweite Regalebene RE2 eingesetzt werden soll.

Die Systemsteuerung 16 kann dann veranlassen, dass die bereits installierten Shuttle 64-1 und 64-4 auf ihre (Lade-)Stationen 14 fahren und dort verharren. Sobald die Shuttle 64-1 und 64-4 auf ihren Ladestationen 14 angekommen sind, werden diese Shuttle 64 geladen. Die Systemsteuerung 16 erfasst entsprechende Ladeströme oder - spannungen, die an den Netzteilen 56 (vgl. Fig. 1) dieser Station 14 abgegriffen werden können. Diese Ladeströme bzw. Ladespannungen repräsentieren Zustandsänderungen der jeweiligen Stationen 14.

Die Stationen 14 sind jeweils eingerichtet, (spezifische) Zustandssignale 76 (vgl. Fig. 1) an die übergeordnete Systemsteuerung 16 zu übertragen. Diese Zustandssignale 76 sind (Stations-)spezifisch, weil z.B. die zugehörige Stations-ID 60 (vgl. Fig. 4) mitübertragen wird. Die mitübertragene Stations-ID 60 ermöglicht eine Identifizierung der sendenden Station 14. Dies bedeutet mit anderen Worten, dass jedes spezifische Zustandssignal 76 eindeutig einer der Stationen 14 zugeordnet werden kann.

Die Systemsteuerung 16 ist also in der Lage, zu erkennen, ob und wann die Shuttle 64-1 und 64-4 sich in Kontakt mit ihren jeweiligen Ladestationen 14 befinden.

Sobald dies geschehen ist, bekommt die Bedienperson 44 die Erlaubnis, den Zutrittsbereich 68-1 zu betreten, um die zweite Regalebene R2 bzw. die zweite Fahrebene 66-2 und die dritte Regalebene R3 bzw. die dritte Fahrebene 66-3 jeweils mit einem Fahrzeug 12 zu bestücken. Nachfolgend wird davon ausgegangen, dass die Bedienperson 44 die zweite Fahrebene 66-2 mit einem Fahrzeug 12 bestückt.

Sobald sich ein Fahrzeug 12, welches die Bedienperson 44 aus einem (nicht gezeigten) Pool auswählen kann, in der zweiten Fahrebene 66-2 befindet, kann die Bedienperson 44 mit ihrem Datenterminal 42 eine datentechnische Verbindung zu diesem Fahrzeug 12 herstellen. Die Verbindung kann mittels des Kabels 46 oder drahtlos erfolgen. Sobald das Fahrzeug 12 und das Datenterminal 42 miteinander verbunden sind, kann der Systemsteuerung 12 signalisiert werden, dass das Fahrzeug 12 zur Konfiguration bereit ist. Diese Information beinhaltet insbesondere die Fahrzeug-ID 52 (logische Adresse) des entsprechenden Fahrzeugs 12. Die Fahrzeug-ID 52 kann von der Bedienperson 44 entweder manuell eingegeben werden oder durch die Fahrzeugsteuerung 36 automatisch aus dem Fahrzeugspeicher 26 ausgelesen und an die Systemsteuerung 16 übertragen werden.

Ferner wird die spezifische Ortsadresse 54, die zur zweiten Fahrebene 66-2 gehört, als gewünschte Ortsadresse an die Systemsteuerung 16 übermittelt. Die spezifische Ortsadresse 54-2, die zur zweiten Fahrebene 66-2 gehört, lautet: "112". Diese gewünschte Ortsadresse 54 kann z.B. von der Bedienperson 44 in das Datenterminal 42 manuell eingegeben werden oder mittels eines Handscanner eingelesen werden, wobei die Fahrebene 66-2 in diesem Fall z.B. mit einem eindeutigen entsprechenden Strichcode versehen ist.

Sobald der Systemsteuerung 16 diese Informationen vorliegen, veranlasst die Systemsteuerung 16 eine Interaktion zwischen dem Fahrzeug 12, das zu konfigurieren ist, und der Station 14, die dieser Fahrebene 66-2 zugeordnet ist. Im vorliegenden Beispiel ist dies also die Station 14-2. Da es sich bei der Station 14-2 um eine Ladestation handelt, ist als Interaktion ein Aufladevorgang definiert. Die Bedienperson 44 hat das zu konfigurierende Fahrzeug 12 deshalb auf der (Lade-)Station 14-2 der Fahrebene 66-2 positioniert.

Um den Ladevorgang eindeutig identifizierbar zu machen, veranlasst die Systemsteuerung 16 ferner, dass das zu konfigurierende Fahrzeug 12 vorher bis unter einen fest vorgegebene Schwellenwerte entladen wird. Dies kann z.B. dadurch geschehen, dass die Bedienperson 44 einen (schaltbaren) Entladewiderstand 78 (vgl. Fig. 2) in das zu konfigurierende Fahrzeug 12 einsteckt. Alternativ kann der Entladewiderstand 78 vorab fest in jedem der Fahrzeuge 12 installiert sein, wobei der Entladewiderstand 78 schaltbar ausgeführt ist, um von der Bedienperson 44 oder von der Systemsteuerung 16 für die Entladung aktiviert zu werden.

Sobald ein gewünschter Schwellenwert der Entladung erreicht ist, kann die Systemsteuerung 16 ein Wiederaufladen veranlassen und beginnen, die Zustände aller (Lade-)Stationen 14 zu überwachen. Da aber nur das zu konfigurierende Fahrzeug 12 unter den fest definierten Schwellenwert entladen wurde, bedeutet dies, dass die anderen Fahrzeuge 12 alle weniger stark entladen sind. Deshalb ist das spezifische Zustandssignal 76 dieser Ladestation charakteristisch.

Charakteristisch bedeutet allgemein, dass sich das Zustandssignal 76 dieser Station 14 signifikant von den (spezifischen) Zustandssignalen 76 der anderen Stationen 14 unterscheidet. Somit ist die Systemsteuerung 16 in der Lage, genau zu verifizieren, welche der Stationen 14 mit dem zu konfigurierendes Fahrzeug 12 gerade agiert.

Deshalb ist die Systemsteuerung 16 ferner dazu in der Lage zu überprüfen, ob die Station 14, die das charakteristische Zustandssignal 76 liefert, die gleiche Station 14 ist, die der zu konfigurierenden Fahrebene 66-2 zugeordnet ist. Dieser Vergleich erfolgt über die spezifische Ortsadresse 54. Dies bedeutet mit anderen Worten, dass das zu konfigurierende Fahrzeug 12, wenn die spezifische Ortsadresse 54 der Station 14, die zum Laden ausgewählt wurde, mit der spezifischen Ortsadresse 54 der Station 143 übereinstimmt, die das charakteristische Zustandssignal 76 liefert, in die richtige Fahrebene 66 eingesetzt wurde. Wurde das zu konfigurierende Fahrzeug 12 in eine falsche Fahrebene 66 eingesetzt, erfolgt die Aufladung über die falsche Station 14. In diesem Fall stimmen die spezifischen Ortsadressen 54 nicht überein.

Dieses Verfahren lässt sich auch auf ein bereits konfiguriertes System zum Zwecke eine Rekonfiguration bzw. der Überprüfung der (hinterlegten) Konfiguration anwenden. Das System befand sich z.B. zuvor in einem (längeren) ungenutzten Ruhezustand (z.B. wegen eines über Tage andauernden Stromausfalls wegen eines Hurricans o.Ä.). Wenn das System aus einem derartigen Zustand wieder in Betrieb genommen wird, sollte vorab überprüft werden, ob die bereits durchgeführten Zuordnungen weiterhin gültig sind. Zu diesem Zweck wird bei der Initialkonfiguration in jedem der Fahrzeuge 12 (dauerhaft) die spezifische Ortsadresse 54 hinterlegt, z.B. in dem (nichtflüchtigen) Speicher 26. Die Systemsteuerung 16 kann dann, jedoch ohne die Bedienperson 44, für jedes Fahrzeug 12 dessen spezifische Ortsadresse 54 prüfen. In diesem Fall ist es von Vorteil, dass der schaltbare Entladewiderstand 78 vorab fest in jedem der Fahrzeuge 12 verbaut ist.

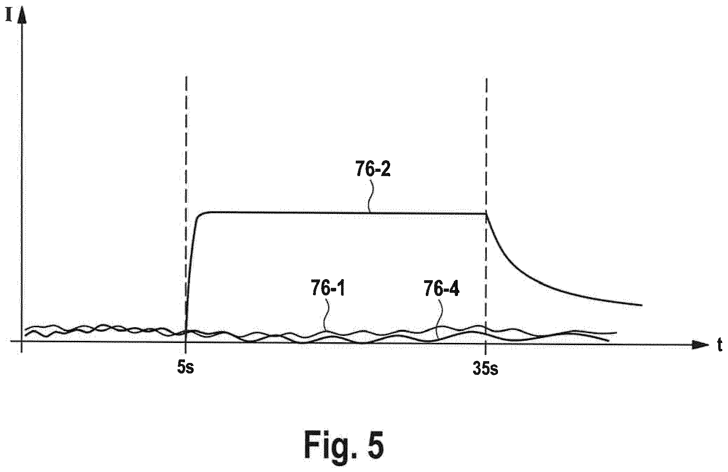

Fig. 5 zeigt einen Graphen, der den zeitlichen Verlauf mehrerer spezifischer Zustandssignale 76 verdeutlicht, die von unterschiedlichen Ladestationen übermittelt werden, die aber die Ladestation umfassen, wo das ausgewählte Fahrzeug 12, d.h. das Shuttle 64-2, geladen wird. Man erkennt, dass das Zustandssignal 76-2 signifikant anders als die anderen Zustandssignale 76-1 und 76-4 ist. Das Zustandssignal 76-2 ist ein "charakteristisches" Zustandssignal 76, welches der Ladestation der Fahrebene 64-2 mit der spezifischen Ortsadresse 54-2 (112) zugeordnet ist (vgl. Fig. 4).

Das Signal 76-2 (z.B. Ladestrom) steigt nach 5s sprunghaft auf einen nahezu konstanten Ladestrom (Signal 76-2) an bis er ab ungefähr 35s abnimmt. In diesem Fall ist der Energiespeicher 38 des Shuttles 64-2 fast voll. Ferner geht man in der Fig. 5 stillschweigend davon aus, dass die Energiespeicher 38 der bereits konfigurierten Shuttle 64-1 und 64-4 voll geladen sind, so dass die entsprechenden Ladeströme (Signal 76-1 und 76-4) nahezu Null sind.

Der Signalanstieg beim Signal 76-2 nach 5s hängt damit zusammen, dass das Netzteil 58 der entsprechenden Station 14-2 nach exemplarischen fünf Sekunden von der Systemsteuerung 16 eingeschaltet wird, nachdem sichergestellt ist, dass das Shuttle 64-2 ausreichend entladen ist. Dass das Shuttle 64-2 ausreichend entladen ist, kann sichergestellt werden, indem man eine gewisse Zeitdauer abwartet, nachdem der Widerstand 78 in das Shuttle 64-2 eingesteckt wurde. Diese Informationen können von der Bedienperson 44 geliefert werden oder durch eine Kommunikation der Steuerungen 16 und 36 ausgetauscht werden.

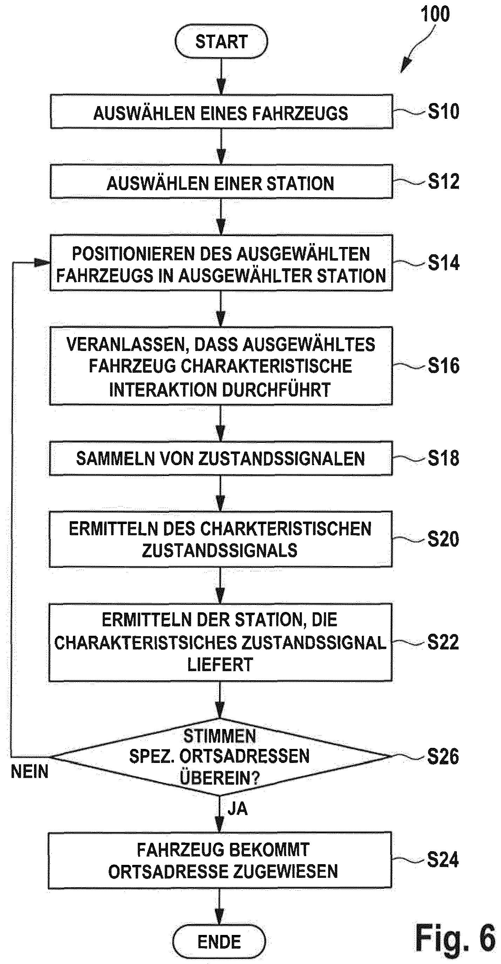

Fig. 6 zeigt ein allgemeines Flussdiagramm eines Verfahrens 100 zum sicheren Konfigurieren eines Fahrzeugs 12 aus einer Vielzahl von Fahrzeugen 12 in einem Lager- und Kommissioniersystem 10, indem dem Fahrzeug 12, das zu konfigurieren ist, eine spezifische Ortsadresse 54 durch eine Systemsteuerung 16 des Systems 10 zugewiesen wird.

Wieder weist das System 10 eine Systemsteuerung 16, eine Vielzahl von Fahrzeuges 12 und eine Vielzahl von (ortsgebundenen stationären) Stationen 14 auf.

Jede der Stationen 14 befindet sich an einem anderen vorbekannten Ort innerhalb des Systems 10. Jedem der vorbekannten Orte ist (genau) eine spezifische Ortsadresse 54 zugewiesen (vgl. Fig. 4). Die spezifische Ortsadresse 54 bezeichnet einen vorbekannten Ort eineindeutig. Die Ortsadresse 54 ist spezifisch, weil jedem Ort eine andere eindeutige Ortsadresse 54 zugewiesen ist.

Jeder der spezifischen Ortsadressen 54 ist ein Fahrbereich (z.B. eine Fahrebene 64) innerhalb des Systems 10 zugewiesen bzw. zugeordnet. In diesem Fahrbereich dürfen sich ein oder mehrere Fahrzeuge 12 bewegen. Jede der Stationen 14 ist eingerichtet, ein spezifisches Zustandssignal 76 zu erzeugen und das spezifische Zustandssignal 76 an die Systemsteuerung 16 zu übermitteln.

Das spezifische Zustandssignal 76 repräsentiert einen Zustand der entsprechenden Station 14. Die Zustände der Station 14 ändern sich aufgrund von Interaktionen zwischen den Fahrzeugen 12 und den Stationen 14. Die Interaktionen werden durch die Fahrzeuge 12 initiiert, lösen bei den Stationen 14 aber eine erfassbare Reaktion aus.

Alternativ zum oben erwähnten Ladevorgang könnte z.B. Ein-/Auslagerungsvorgang mithilfe des LAM 40 (vgl. Fig. 2) durchgeführt werden. Das LAM 40 könnte z.B. zweimal hintereinander seine (hier nicht bezeichneten und gezeigten) Teleskoparme in einen Lagerplatz (Station) in einer vorgegebenen Sequenz (Dauer der Einlagerung und Auslagerung) einfahren und ausfahren, was durch Lichtschranken 58 erfassbar ist, die in den Stationen 14 entsprechend verbaut sind.

Ferner weist jede der Stationen 14 eine spezifische Stations-ID 60 auf, die eine spezifische logische Adresse darstellt oder mit einer spezifischen logischen Adresse verknüpfbar ist.

Jedes der Fahrzeuge 12 weist eine Fahrzeugsteuerung 36 und eine spezifische Fahrzeug-ID 52 auf. Die spezifische Fahrzeug-ID 52 kann eine spezifische logische Adresse darstellen oder mit dieser verknüpft werden.

Das Verfahren 100 der Fig. 6 weist die folgenden Schritte auf.

In einem Schritt S10 wird eines der Fahrzeuge 12, das zu konfigurieren ist, aus der Vielzahl der Fahrzeug 12 ausgewählt. Die Auswahl kann entweder durch die Bedienperson 44 oder die Systemsteuerung 16 erfolgen. Erfolgt die Auswahl durch die Systemsteuerung 16, kann das ausgewählte Fahrzeug 12 bzw. dessen Fahrzeug-ID 52 z.B. über das Datenterminal 42 an die Bedienperson 44 kommuniziert werden. In diesem Fall sucht die Bedienperson 44 das ausgewählte Fahrzeug aus dem Pool von noch nicht konfigurierten Fahrzeugen 12 aus. Anderenfalls sucht sich die Bedienperson 44 einfach ein beliebiges, noch nicht konfiguriertes Fahrzeug 12 aus dem Pool aus.

In einem Schritt S12 wird eine Station 14, wo das ausgewählte Fahrzeug 12 betrieben werden soll, aus der Vielzahl von Stationen 14 ausgewählt. Dies bedeutet, dass ein Ort ausgewählt wird, wo das zu konfigurierende Fahrzeug 12 eingesetzt werden soll. Über die Auswahl der Station 14 erfolgt gleichzeitig die Auswahl des Einsatzortes. Der Einsatzort ist über die spezifische Ortsadresse 54 (vgl. Fig. 4) der ausgewählten Station 14 definiert, da jeder der Stationen 14 vorab bereits eine spezifische Ortsadresse 54 zugewiesen wurde.

Die Station 14 kann im Schritt S12 wiederum durch die Bedienperson 44 oder die Systemsteuerung 16 ausgewählt werden. Wenn die Systemsteuerung 16 auswählt, kann die entsprechende Information (spezifische Ortsadresse 54 und/oder Stations-ID 60) über das Datenterminal 42 angezeigt werden. Die Bedienperson 44 kann diese Information z.B. durch Berühren der Anzeige 48 bestätigen.

In einem Schritt S14 wird das ausgewählte Fahrzeug 12 in der ausgewählten Station 14 positioniert. Auch das Positionieren des Schritts S14 kann von der Bedienperson 44 oder von der Systemsteuerung 16 durchgeführt werden. Üblicherweise veranlasst die Bedienperson 44, dass das ausgewählte Fahrzeug 12 in der ausgewählten Station 14 positioniert wird. Dazu kann die Bedienperson 44 weitere (nicht dargestellte und bezeichnete) Hilfsmittel (z.B. Kräne und dergleichen) einsetzen, insbesondere wenn das ausgewählte Fahrzeug 12 ein Shuttle 64 ist, das in eine der Fahrebenen 66 zu schieben ist.

Sobald das ausgewählte Fahrzeug 12 in der ausgewählten Station 14 positioniert ist, kann eine entsprechende Information an die Systemsteuerung 16 übermittelt werden. Diese Information kann von der Bedienperson 44 über das Datenterminal 42 übermittelt werden.

In einem Schritt S16 veranlasst die Systemsteuerung 16, dass das ausgewählte Fahrzeug 12 eine charakteristische Interaktion mit der Station 14 durchführt, in welcher das ausgewählte Fahrzeug 12 positioniert ist.

Die charakteristische Interaktion kann das oben erwähnte Einstecken eines Entladewiderstands 78 in das ausgewählte Fahrzeug 12 umfassen. Den Entladewiderstand 78 führt die Bedienperson 44 mit sich. Gleichzeitig dürfen bereits installierte Fahrzeuge 12, die vorzugsweise von der Systemsteuerung 16 zuvor auf ihre zugehörigen Stationen 14 gerufen wurden, weiterhin Interaktionen mit ihren Stationen 14 durchführen (z.B. Laden des Energiespeichers 38).

Die (optionale) Aufforderung der anderen Fahrzeuge 12, sich in ihre zugehörigen Stationen 14 zu bewegen, hat den Vorteil, dass sicherheitstechnischen Anforderungen genügt wird. Wenn sich die anderen Fahrzeuge 12 in ihren Stationen 14 befinden, können sie sich nicht bewegen, d.h. sie befinden sich in einem Ruhezustand. Dadurch ist ausgeschlossen, dass die Bedienperson 44, die sich zu diesem Zeitpunkt innerhalb der Regalanordnung 18 aufhält, durch herumfahrende Fahrzeuge 12 verletzt werden kann.

Ein weiterer Vorteil ist darin zu sehen, dass die anderen Fahrzeuge 12 aufgeladen werden, während das ausgewählte Fahrzeug 12 in seiner (ausgewählten) Station 14 positioniert wird. Dies bedeutet, dass die anderen Fahrzeuge 12 zum Zeitpunkt der Durchführung der charakteristischen Interaktion (Ladevorgang) zwischen dem ausgewählten Fahrzeug 12 und der ausgewählten Station 14 wahrscheinlich nahezu vollständig aufgeladen sind, während das ausgewählte Fahrzeug 12 unter einem vorab definierten, vorgegebenen Schwellenwert entladen wurde.

Dies hat wiederum zur Folge, dass sich die Ladeströme bzw. Ladespannungen, d.h. die Zustandssignale 76, signifikant unterscheiden, so dass die Identifizierung des charakteristischen Zustandssignals 76 einfach ist. Das charakteristische Zustandssignal 76 repräsentiert den Ladestrom des unter dem vorgegebenen Schwellenwert entladenen ausgewählten Fahrzeugs 12.

In einem Schritt S18 sammelt die Systemsteuerung 16 zumindest das Zustandssignal 76 der Station 14, in welcher sich das ausgewählte Fahrzeug 12 befindet. Dieses Zustandssignal 76 ist das charakteristische Zustandssignal und daher erkennbar.

Vorzugsweise werden alle verfügbaren Zustandssignale 76 während der Durchführung der charakteristischen Interaktion durch die Systemsteuerung 16 gesammelt.

In einem Schritt S20 ermittelt die Systemsteuerung 16 das charakteristische Zustandssignal 76 aus den gesammelten Zustandssignalen 76. Generell gilt, dass das charakteristische Zustandssignal 76 nur durch die charakteristische Interaktion hervorrufbar ist.

In einem Schritt S22 ermittelt die Systemsteuerung 16 die Station 14, die das charakteristische Zustandssignal 76 übermittelt hat. Da das charakteristische Zustandssignal ebenfalls ein spezifisches Zustandssignal 76 ist, kann daraus die zugehörige spezifische Ortsadresse 54 ermittelt werden. Wie oben bereits erwähnt, sind die spezifischen Zustandssignale 76 deshalb spezifisch, weil aus ihnen eine Kennung bzw. die Stations-ID 60 ableitbar ist. Die Stations-ID 60 ist wiederum (genau) einer spezifischen Ortsadresse 54 zugeordnet (vgl. Fig. 4).

Wenn die spezifische Ortsadresse 54 der im Schritt S22 ermittelten Station 14 mit der spezifischen Ortsadresse 54 der im Schritt S12 ausgewählten Station 14 übereinstimmt, dann bekommt das im Schritt S10 ausgewählte Fahrzeug 12 die spezifische Ortsadresse 54 der ausgewählten Station 14 zugewiesen bzw. zugeordnet.

In diesem Fall ist sichergestellt, dass die Station 14 mit jenem ausgewählten Fahrzeug 12 interagiert hat, die mit diesem Fahrzeug 12 auch interagieren sollte.

Steht das ausgewählte Fahrzeug 12 in einer falschen Station 14, so wird das charakteristische spezifische Zustandssignal 76 von der falschen Station 14 geliefert. Dies bedeutet, dass die spezifische Ortsadresse 54 der Station 14, die das charakteristische spezifische Zustandssignal 76 liefert, nicht mit der spezifischen Ortsadresse 54 der Station 14 übereinstimmt, von der man erwartet, dass sie das charakteristische spezifische Zustandssignal 76 liefert.

Wenn die spezifischen Ortsadressen nicht übereinstimmen (vgl. Abfrage im Schritt S26 in Fig. 6), kehrt man zum Schritt S14 zurück. Dies bedeutet, dass das ausgewählte Fahrzeug 12 umgesetzt werden muss.

Es versteht sich, dass der oben beschriebene Aufladevorgang nur ein Beispiel für eine charakteristische Interaktion ist. Alternativ könnten andere Interaktionen zwischen den Fahrzeugen 12 und den Stationen 14 definiert werden. Eine Alternative spiegelt sich in der oben beschriebenen Ein- und Auslagerungssequenz wider, wobei die Stationen 14 dann einfache Regallagerplätze sein können, die mit Lichtschranken 58 versehen sind.

Ferner versteht es sich, dass die Bestückung einer Regalanordnung 18 mit Shuttle 64 lediglich exemplarischer Natur ist. Das oben beschriebene Verfahren könnte auch bei anderen Anwendungen in der Intralogistik eingesetzt werden. So könnten z.B. fahrerlose Transportfahrzeuge (FTF, AGV, etc.) in einer Fahrfläche auf eine analoge Weise konfiguriert werden. Die Fahrebenen 66 innerhalb der Regalanordnung 18 könnten in diesem Fall durch Fahrwege bzw. Fahrkorridore oder Fahrflächen ersetzt werden.

Die fahrerlosen Transportfahrzeuge sind flurgebunden, wohingegen die Shuttle 66 regalgebunden sind. Dennoch ist das Verfahren 100 auch auf die flurgebundenen Transportfahrzeuge anwendbar.

### Bezugszeichenliste:

- 10: Lager- und Kommissioniersystem bzw. "System"
- 12: Fahrzeug
- 14: Station
- 16: Systemsteuerung
- 18: Regalanordnung
- 20: Regal
- 22: (Regal-) Gasse
- 24: Datenverarbeitungseinrichtung
- 26: (Daten-) Speicher
- 28: (Kommunikations-) Schnittstelle (I/O)
- 30: Leitung
- 32: Drahtlosverbindung
- 34: Bussystem
- 36: Fahrzeugsteuerung
- 38: Energiespeicher
- 40: Lastaufnahmemittel (LAM)
- 42: Datenterminal
- 44: Bedienperson
- 46: Kabel
- 48: Anzeige
- 50: Eingabeeinrichtung
- 52: Fahrzeug-ID
- 54: spezifische Ortsadresse
- 56: Netzteil von 14
- 58: Lichtschranke
- 60: Stations-ID
- 62: Lagergut
- 64: Shuttle
- 66: Fahrebene
- 68: Zutrittsbereich
- 69: Trittgitter
- 70: Konfigurationstabelle
- 72: (stations-)spezifische Netzwerk-Adresse
- 74: (fahrzeug-)spezifische Netzwerk-Adresse
- 76: (stations-)spezifische Zustandssignal
- 78: Entladewiderstand
- 100: Verfahren

## Patentansprüche

1. Verfahren (100) zum sicheren Konfigurieren eines Fahrzeugs (12) aus einer Vielzahl von Fahrzeugen (12) in einem Lager- und Kommissioniersystem (10), indem dem Fahrzeug (12), das zu konfigurieren ist, eine spezifische Ortsadresse (54) durch eine Systemsteuerung (16) zugewiesen wird,
wobei das Lager- und Kommissioniersystem (10) aufweist:
die Systemsteuerung (16);
die Vielzahl von Fahrzeugen (12); und
eine Vielzahl von ortsgebundenen, stationären Stationen (14);
wobei sich jede der Stationen (14) an einem anderen vorbekannten Ort innerhalb des Lager- und Kommissioniersystems (10) befindet, wobei jedem der vorbekannten Orte eine spezifische Ortsadresse (54) zugewiesen ist, wobei jeder der spezifischen Ortsadressen (54) ein Fahrbereich innerhalb des Lager- und Kommissioniersystems (10) zugewiesen ist, in welchem sich die die Fahrzeuge (12) bewegen dürfen;
wobei jede der Stationen (14) eingerichtet ist, ein spezifisches Zustandssignal (76) zu erzeugen und das spezifische Zustandssignal (76) an die Systemsteuerung (16) zu übermitteln, wobei das spezifische Zustandssignal (76) einen Zustand der entsprechenden Station (14) repräsentiert, und wobei sich der Zustand der entsprechenden Station (14) aufgrund einer Interaktion zwischen einem der Fahrzeuge (12) und der entsprechenden Station (14) ändert;
wobei jede der Stationen (14) eine spezifische Stations-ID aufweist, die einer spezifischen logischen Adresse entspricht;
wobei jedes Fahrzeug (12) eine Fahrzeugsteuerung (36) und eine spezifische Fahrzeug-ID (52), die einer spezifischen logischen Adresse entspricht, aufweist;
wobei das Verfahren (100) die Schritte aufweist:
Auswählen (S10) des Fahrzeugs (12), das zu konfigurieren ist, aus der Vielzahl der Fahrzeuge (12);
Auswählen (S12) einer Station (14) aus der Vielzahl von Stationen (14), wo das ausgewählte Fahrzeug (12) betrieben werden soll;
Positionieren (S14) des ausgewählten Fahrzeugs (12) in der ausgewählten Station (14);
Veranlassen (S16), durch die Systemsteuerung (16), dass das ausgewählte Fahrzeug (12) eine charakteristische Interaktion mit der Station (12) durchführt, in der das ausgewählte Fahrzeug (12) positioniert ist, während nicht ausgewählte Fahrzeuge (12) Interaktionen mit Stationen (14) durchführen dürfen, in denen das ausgewählte Fahrzeug (12) nicht positioniert ist;
Sammeln (S18), durch die Systemsteuerung (16), von spezifischen Zustandssignalen (76), die während einer Durchführung der charakteristischen Interaktion durch die Stationen (14) übermittelt werden;
Ermitteln (S20), durch die Systemsteuerung (16), eines charakteristischen spezifischen Zustandsignals (76) aus den gesammelten spezifischen Zustandssignalen (76), wobei das charakteristische spezifische Zustandssignal (76) nur durch die charakteristische Interaktion hervorrufbar ist;
Ermitteln (S22), durch die Systemsteuerung (16), der Station (14), die das charakteristische spezifische Zustandssignal (76) übermittelt hat; und
Zuweisen (S24) der spezifischen Ortsadresse (54) der ausgewählten Station (14) zu der Fahrzeug-ID (52) des ausgewählten Fahrzeugs (12) für den Fall, dass die spezifische Ortsadresse (54) der ermittelten Station (14), die das charakteristische spezifische Zustandssignal (76) übermittelt hat, mit der spezifischen Ortsadresse (54) der ausgewählten Station (14) übereinstimmt.

2. Verfahren nach Anspruch 1, wobei der Schritt (S12) des Auswählens der Station (14) durch eine Bedienperson (44) oder durch die Systemsteuerung (16) durchgeführt wird.

3. Verfahren nach Anspruch 1 oder 2, wobei der Schritt (S10) des Auswählens des Fahrzeugs (12) durch eine Bedienperson (44) oder durch die Systemsteuerung (16) durchgeführt wird.

4. Verfahren nach einem der Ansprüche 1 bis 3, wobei der Schritt (S16) des Positionierens des ausgewählten Fahrzeugs (14) in der ausgewählten Station (14) durch eine Bedienperson (44) durchgeführt wird, wobei die Systemsteuerung (16) zuvor insbesondere veranlasst, dass sich Fahrzeuge (12), die bereits konfiguriert sind, in eine zugehörige Station (14) bewegen und dort verharren, bis die Konfiguration des ausgewählten Fahrzeugs (12) abgeschlossen ist.

5. Verfahren nach Anspruch 4, das ferner aufweist:
Herstellen einer, vorzugsweise physischen, Datenverbindung zwischen der Fahrzeugsteuerung (36) des ausgewählten Fahrzeugs (12) und einem Datenterminal (42), das die Bedienperson (44) mit sich führt; und
Informieren der Systemsteuerung (16) durch das Datenterminal (42), dass das ausgewählte Fahrzeug (12) zur Durchführung der charakteristischen Interaktion veranlasst werden kann, wobei der Systemsteuerung (16) insbesondere die Fahrzeug-ID (52) des ausgewählten Fahrzeugs (12) mitgeteilt wird;
wobei das Datenterminal (42) eine Anzeige (48) und eine Eingabeeinrichtung (50) aufweist und wobei das Datenterminal (42) ferner eingerichtet ist, der Bedienperson (44) eine Konfigurationsmaske anzuzeigen, über die die Bedienperson (44) Konfigurationsdaten für das ausgewählte Fahrzeug (12), insbesondere die entsprechende Fahrzeug-ID (52) oder eine spezifische Ortsadresse (54), auswählen und eingeben kann.

6. Verfahren nach einem der vorhergehenden Ansprüche, wobei die Fahrzeuge (12) flurgebundene fahrerlose Transportfahrzeuge und/oder regalgebundene Regalbediengeräte sind, die zur Bedienung einer, vorzugsweise einzigen, Regalebene (RE) einer Vielzahl von übereinander angeordneten Regalebenen (RE) eingerichtet sind.

7. Verfahren nach einem der vorhergehenden Ansprüche, wobei:
zumindest das ausgewählte Fahrzeug (12), und insbesondere jedes der Fahrzeuge (12), einen elektrischen Energiespeicher (38) aufweist;
die Stationen (14) elektrische Ladestationen zum Laden des Energiespeichers (38) des ausgewählten Fahrzeugs (12) sind;
Fahrzeuge (12), die den elektrischen Energiespeicher (38) aufweisen, eingerichtet sind, in den Ladestationen elektrisch aufgeladen zu werden;
die spezifischen Zustandssignale (76) Ladeströme oder Ladespannungen repräsentieren; und
die charakteristische Interaktion ein Entladen des Energiespeichers (38) des ausgewählten Fahrzeugs (12) und ein Wiederaufladen in einer der Ladestationen umfasst.

8. Verfahren nach Anspruch 7, wobei das Entladen des Energiespeichers (38) des ausgewählten Fahrzeugs (12) ein, insbesondere vorübergehendes, Installieren eines Entladewiderstands (78) im ausgewählten Fahrzeug (12) durch die Bedienperson (44) umfasst.

9. Verfahren nach Anspruch 8, wobei das Wiederaufladen nach dem Ablauf eines Timers begonnen wird, der so eingestellt ist, dass der Energiespeicher (38) des ausgewählten Fahrzeugs (12) unter einen vorab definierten Schwellenwert entladen ist.

10. Verfahren nach einem der vorhergehenden Ansprüche, wobei:
das ausgewählte Fahrzeug (12), und insbesondere jedes der Fahrzeuge (12), ein Lastaufnahmemittel (40) aufweist;
die Stationen (14) mit Lichtschranken (58) versehene, vorzugsweise regalintegrierte, Lagergut-Übergabestationen sind;
jedes der Lastaufnahmemittel (40) eingerichtet ist und die Lichtschranken (58) so angeordnet sind, dass die Lichtschranken (58) in einem ausgefahrenen Zustand der Lastaufnahmemittel (40) unterbrochen werden und dass die Lichtschranken (58) in einem eingezogenen Zustand der Lastaufnahmemittel (40) nicht unterbrochen werden;
die spezifischen Zustandssignale (76) angeben, ob und wie lange die entsprechenden Lichtschranken (58) unterbrochen sind; und
die charakteristische Interaktion ein Ausfahren und Einfahren des Lastaufnahmemittels (40) des ausgewählten Fahrzeugs (12) in einer vorab definierten, charakteristischen Sequenz umfasst.

11. Verfahren nach einem der vorhergehenden Ansprüche, wobei die spezifischen logischen Adressen der Stationen (14) den Stations-IDs (60) entsprechen und die spezifischen logischen Adressen der Fahrzeuge (12) den Fahrzeug-IDs (52) entsprechen.

12. Verfahren nach einem der vorhergehenden Ansprüche, wobei die spezifischen logischen Adressen der Stationen (14) spezifischen Netzwerk-Adressen (72) der Stationen (14) entsprechen und die spezifischen logischen Adressen der Fahrzeuge (12) spezifischen Netzwerk-Adressen (74) der Fahrzeuge (12) entsprechen.

13. Lager- und Kommissioniersystem (10) mit einer Systemsteuerung, einer Vielzahl von Fahrzeugen und einerVielzahl von ortsgebundenen, stationären Stationen (14); wobei sich jede der Stationen (14) an einem anderen vorbekannten Ort innerhalb des Lager- und Kommissioniersystems (10) befindet, wobei jedem der vorbekannten Orte eine spezifische Ortsadresse (54) zugewiesen ist, wobei jeder der spezifischen Ortsadressen (54) ein Fahrbereich innerhalb des Lager- und Kommissioniersystems (10) zugewiesen ist, in welchem sich die die Fahrzeuge (12) bewegen dürfen; wobei jede der Stationen (14) eingerichtet ist, ein spezifisches Zustandssignal (76) zu erzeugen und das spezifische Zustandssignal (76) an die Systemsteuerung (16) zu übermitteln, wobei das spezifische Zustandssignal (76) einen Zustand der entsprechenden Station (14) repräsentiert, und wobei sich der Zustand der entsprechenden Station (14) aufgrund einer Interaktion zwischen einem der Fahrzeuge (12) und der entsprechenden Station (14) ändert; wobei jede der Stationen (14) eine spezifische Stations-ID aufweist, die einer spezifischen logischen Adresse entspricht; wobei jedes Fahrzeug (12) eine Fahrzeugsteuerung (36) und eine spezifische Fahrzeug-ID (52), die einer spezifischen logischen Adresse entspricht, aufweist, und wobei die Systemsteuerung (16) eingerichtet ist, das Verfahren nach einem der vorhergehenden Ansprüche auszuführen.

## Claims

1. A method (100) for securely configuring a vehicle (12) of a plurality of vehicles (12) in a storage and order-picking system (10) by assigning, by means of a system controller (16), a specific location address (54) to the vehicle (12), which is to be configured,
wherein the storage and order-picking system (10) comprises:
the system controller (16);
the plurality of vehicles (12); and
a plurality of location-bound stationary stations (14);
wherein each of the stations (14) is located at a different pre-known location within the storage and order-picking system (10), wherein a specific location address (54) is assigned to each of the pre-known locations, wherein a traveling area, within the storage and order-picking system (10) in which the vehicles (12) are allowed to move, is assigned to each of the specific location addresses (54);
wherein each of the stations (14) is configured to generate a specific status signal (76) and transmit the specific status signal (76) to the system controller (16), wherein the specific status signal (76) represents a status of the corresponding station (14), and wherein the status of the corresponding station (14) changes due to an interaction between one of the vehicles (12) and the corresponding station (14);
wherein each of the stations (14) has a specific station ID corresponding to a specific logical address;
wherein each vehicle (12) comprises a vehicle controller (36) and has a specific vehicle ID (52) corresponding to a specific logical address;
wherein the method (100) comprises the steps of:
selecting (S10) the vehicle (12), which is to be configured, from the plurality of vehicles (12);
selecting (S12) a station (14) from the plurality of stations (14) where the selected vehicle (12) is to be operated;
positioning (S14) the selected vehicle (12) in the selected station (14);
causing (S16), by the system controller (16), the selected vehicle (12) to perform a characteristic interaction with the station (12) within which the selected vehicle (12) is positioned while non-selected vehicles (12) are allowed to perform interactions with stations (14) within which the selected vehicle (12) is not positioned;
collecting (S18), by the system controller (16), specific status signals (76) transmitted by the stations (14) during performance of the characteristic interaction;
determining (S20), by the system controller (16), a characteristic specific status signal (76) from the selected specific status signals (76), wherein the characteristic specific status signal (76) is causable by the characteristic interaction only;
determining (S22), by the system controller (16), the station (14) which has transmitted the characteristic specific status signal (76); and
assigning (S24) the specific location address (54) of the selected station (14) to the vehicle ID (52) of the selected vehicle (12) in case that the specific location address (54) of the determined station (14), which has transmitted the characteristic specific status signal (76), matches with the specific location address (54) of the selected station (14).

2. The method of claim 1, wherein the step (S12) of selecting the station (14) is performed by an operator (44), or by the system controller (16).

3. The method of claim 1 or 2, wherein the step (S10) of selecting the vehicle (12) is performed by an operator (44), or by the system controller (16).

4. The method of any of claims 1 to 3, wherein the step (S16) of positioning the selected vehicle (14) in the selected station (14) is performed by an operator (44), wherein the system controller (16) preferably causes vehicles (12), which are already configured, in advance to move into an associated station (14) and to persist there until the configuration of the selected vehicle (12) is completed.

5. The method of claim 4 further comprising:
establishing a, preferably physical, data connection between the vehicle controller (36) of the selected vehicle (12) and a data terminal (42) carried by the operator (44); and
informing the system controller (16), by means of the data terminal (42), that the selected vehicle (12) can be caused to conduct the characteristic interaction, wherein the system controller (16) is preferably notified on the vehicle ID (52) of the selected vehicle (12);
wherein the data terminal (42) comprises a display (48) and an input device (50), and wherein the data terminal (42) is further configured to display to the operator (44) a configuration mask via which the operator (44) can select and input configuration data for the selected vehicle (12), in particular the corresponding vehicle ID (52) or a specific location address (54).

6. The method of any of the preceding claims, wherein the vehicles (12) are floor-bound driverless transport vehicles and/or rack-bound storage and retrieval devices being configured for operating one, preferably single, rack level (RE) of a plurality of rack levels (RE) arranged on top of each other.

7. The method of any of the preceding claims, wherein:
at least the selected vehicle (12), and in particular each of the vehicles (12), comprises an electrical energy storage (38);
the stations (14) are electric charging stations for charging the energy storage (38) of the selected vehicle (12);
vehicles (12), which comprise the electric energy storage (38), are configured to be electrically charged within the charging stations;
the specific status signals (76) represent charging currents, or charging voltages; and
the characteristic interaction includes discharging the energy storage (38) of the selected vehicle (12) and re-charging in one of the charging stations.

8. The method of claim 7, wherein the discharging of the energy storage (38) of the selected vehicle (12) includes installing, by the operator (44), a discharging resistor (78) in the selected vehicle (12), in particular temporarily.

9. The method of claim 8, wherein the re-charging is started after the lapse of a timer which is set such that the energy storage (38) of the selected vehicle (12) is discharged below a predefined threshold value.

10. The method of any of the preceding claims, wherein:
the selected vehicle (12), and in particular each of the vehicles (12), comprises a load-handling device (40);
the stations (14) are, preferably rack-integrated, storage-good transferring stations being provided with light barriers (58);
each of the load-handling devices (40) is configured and the light barriers (58) are arranged, such that the light barriers (58) are interrupted in an extracted state of the load-handling devices (40) and the light barriers (58) are not interrupted in a retracted state of the load-handling devices (40);
the specific status signals (76) indicate whether, and how long, the corresponding light barriers (58) are interrupted; and
the characteristic interaction includes extracting and retracting the load-handling device (40) of the selected vehicle (12) in a predefined characteristic sequence.

11. The method of any of the preceding claims, wherein the specific logical addresses of the stations (14) correspond to the station IDs (60), and the specific logical addresses of the vehicles (12) correspond to the vehicle IDs (52).

12. The method of any of the preceding claims, wherein the specific logical addresses of the stations (14) correspond to the specific network addresses (72) of the stations (14), and the specific logical addresses of the vehicles (12) correspond to the specific network addresses (74) of the vehicles (12).

13. A storage and order-picking system (10) including a system controller, a plurality of vehicles, and a plurality of location-bound stationary stations (14); wherein each of the stations (14) is located at a different pre-known location within the storage and order-picking system (10), wherein a specific location address (54) is assigned to each of the pre-known locations, wherein a traveling area, in which the vehicles (12) are allowed to move, within the storage and order-picking system (10) is assigned to each of the specific location addresses (54); wherein each of the stations (14) is configured to generate a specific status signal (76) and to transmit the specific status signal (76) to the system controller (16), wherein the specific status signal (76) represents a status of the corresponding station (14), and wherein the status of the corresponding station (14) changes due to an interaction between one of the vehicles (12) and the corresponding station (14); wherein each of the stations (14) has a specific station ID corresponding to a specific logical address; wherein each vehicle (12) comprises a vehicle controller (36) and has one specific vehicle ID (52) corresponding to a specific logical address, and wherein the system controller (16) is configured to conduct the method of any of the preceding claims.

## Revendications

1. Procédé (100) pour configurer de manière sécurisée un véhicule (12) parmi une pluralité de véhicules (12) dans un système de stockage et de préparation de commandes (10) en attribuant, par un contrôleur de système (16), une adresse de localisation spécifique (54) au véhicule (12) à configurer,
le système de stockage et de préparation de commandes (10) possédant :
le contrôleur de système (16) ;
la pluralité de véhicules (12) ; et
une pluralité de stations (14) fixes rattachées à un emplacement ;
chacune des stations (14) se trouvant à un emplacement différent connu à l'avance au sein du système de stockage et de préparation de commandes (10), une adresse d'emplacement spécifique (54) étant attribuée à chacun des emplacements connus à l'avance, une zone de déplacement au sein du système de stockage et de préparation de commandes (10), dans laquelle les véhicules (12) sont autorisés à se déplacer, étant attribuée à chacune des adresses d'emplacement spécifiques (54) ;
chacune des stations (14) étant conçue pour générer un signal d'état spécifique (76) et pour communiquer le signal d'état spécifique (76) au contrôleur de système (16), le signal d'état spécifique (76) représentant un état de la station correspondante (14), et l'état de la station correspondante (14) changeant en raison d'une interaction entre l'un des véhicules (12) et la station correspondante (14) ;
chacune des stations (14) possédant un identifiant de station spécifique, lequel correspond à une adresse logique spécifique ;
chaque véhicule (12) possédant un contrôleur de véhicule (36) et un identifiant de véhicule spécifique (52) qui correspond à une adresse logique spécifique ;
le procédé (100) comprenant les étapes suivantes :
sélection (S10) du véhicule (12) qui doit être configuré, parmi la pluralité de véhicules (12) ;
sélection (S12) d'une station (14), parmi la pluralité de stations (14), où le véhicule sélectionné (12) doit être mis en service ;
positionnement (S14) du véhicule sélectionné (12) dans la station sélectionnée (14) ;
ordonnance (S16), par le contrôleur de système (16), que le véhicule sélectionné (12) effectue une interaction caractéristique avec la station (12), dans laquelle le véhicule sélectionné (12) est positionné, tandis que les véhicules non sélectionnés (12) sont autorisés à effectuer des interactions avec des stations (14) dans lesquelles le véhicule sélectionné (12) n'est pas positionné ;
collecte (S18), par le contrôleur de système (16), de signaux d'état spécifiques (76) qui sont communiqués par les stations (14) pendant une exécution de l'interaction caractéristique ;
détermination (S20), par le contrôleur de système (16), d'un signal d'état spécifique (76) caractéristique à partir des signaux d'état spécifiques (76) collectés, le signal d'état spécifique (76) caractéristique ne pouvant être provoqué que par l'interaction caractéristique ;
détermination (S22), par le contrôleur de système (16), de la station (14) qui a communiqué le signal d'état spécifique (76) caractéristique ; et
attribution (S24) de l'adresse d'emplacement spécifique (54) de la station sélectionnée (14) à l'identifiant de véhicule (52) du véhicule sélectionné (12) dans le cas où l'adresse d'emplacement spécifique (54) de la station déterminée (14), qui a communiqué le signal d'état spécifique (76) caractéristique, coïncide avec l'adresse d'emplacement spécifique (54) de la station sélectionnée (14).

2. Procédé selon la revendication 1, l'étape (S12) de sélection de la station (14) étant exécutée par un opérateur (44) ou par le contrôleur de système (16).

3. Procédé selon la revendication 1 ou 2, l'étape (S10) de sélection du véhicule (12) étant exécutée par un opérateur (44) ou par le contrôleur de système (16).

4. Procédé selon l'une des revendications 1 à 3, l'étape (S16) de positionnement du véhicule sélectionné (14) dans la station sélectionnée (14) étant exécutée par un opérateur (44), le contrôleur de système (16) ordonnant préalablement notamment que les véhicules (12) qui sont déjà configurés se déplacent dans une station (14) associée et y demeurent jusqu'à ce que la configuration du véhicule sélectionné (12) soit terminée.

5. Procédé selon la revendication 4, qui comprend en outre :
établissement d'une connexion de données, de préférence physique, entre le contrôleur de véhicule (36) du véhicule sélectionné (12) et un terminal de données (42) que l'opérateur (44) emporte avec lui ; et
information du contrôleur de système (16), par le terminal de données (42), que le véhicule sélectionné (12) peut être amené à effectuer l'interaction caractéristique, l'identifiant de véhicule (52) du véhicule sélectionné (12) étant notamment communiqué au contrôleur de système (16) ;
le terminal de données (42) possédant un afficheur (48) et un dispositif de saisie (50) et le terminal de données (42) étant en outre conçu pour afficher à l'opérateur (44) un masque de configuration par le biais duquel l'opérateur (44) peut sélectionner et saisir des données de configuration pour le véhicule sélectionné (12), notamment l'identifiant de véhicule (52) ou correspondant une adresse d'emplacement spécifique (54).

6. Procédé selon l'une des revendications précédentes, les véhicules (12) étant des véhicules de transport sans conducteur liés au sol et/ou des gerbeurs liés à des rayonnages, qui sont conçus pour desservir un niveau de rayonnage (RE), de préférence unique, d'une pluralité de niveaux de rayonnage (RE) disposés les uns au-dessus des autres.

7. Procédé selon l'une des revendications précédentes, selon lequel :
au moins le véhicule sélectionné (12), et notamment chacun des véhicules (12), possède un accumulateur d'énergie électrique (38) ;
les stations (14) sont des stations de charge électriques servant à charger l'accumulateur d'énergie (38) du véhicule sélectionné (12) ;
les véhicules (12) qui possèdent l'accumulateur d'énergie électrique (38) sont conçus pour être chargés électriquement dans les stations de charge ;
les signaux d'état spécifiques (76) représentent des courants de charge ou des tensions de charge ; et
l'interaction caractéristique comprend une décharge de l'accumulateur d'énergie (38) du véhicule sélectionné (12) et une recharge dans l'une des stations de charge.

8. Procédé selon la revendication 7, la décharge de l'accumulateur d'énergie (38) du véhicule sélectionné (12) comprenant une installation, notamment temporaire, par l'opérateur (44) d'une résistance de décharge (78) dans le véhicule sélectionné (12).

9. Procédé selon la revendication 8, la recharge commençant après l'expiration d'une temporisation qui est réglée de telle sorte que l'accumulateur d'énergie (38) du véhicule sélectionné (12) soit déchargé en dessous d'une valeur de seuil préalablement définie.

10. Procédé selon l'une des revendications précédentes, selon lequel :
le véhicule sélectionné (12), et notamment chacun des véhicules (12), possède un moyen de réception de charge (40) ;
les stations (14) sont des stations de transfert de marchandises stockées pourvues de barrières photoélectriques (58), de préférence intégrées dans des rayonnages ;
chacun des moyens de réception de charge (40) est conçu et les barrières photoélectriques (58) disposées de telle sorte que les barrières photoélectriques (58) sont interrompues dans un état sorti des moyens de réception de charge (40) et que les barrières photoélectriques (58) ne sont pas interrompues dans un état rétracté des moyens de réception de charge (40) ;
les signaux d'état spécifiques (76) indiquent si les barrières photoélectriques (58) correspondantes sont interrompues et pendant combien de temps ; et
l'interaction caractéristique comprend une sortie et une rétraction du moyen de réception de charge (40) du véhicule sélectionné (12) dans une séquence caractéristique préalablement définie.

11. Procédé selon l'une quelconque des revendications précédentes, les adresses logiques spécifiques des stations (14) correspondant aux identifiants de station (60) et les adresses logiques spécifiques des véhicules (12) correspondant aux identifiants de véhicule (52).

12. Procédé selon l'une quelconque des revendications précédentes, les adresses logiques spécifiques des stations (14) correspondant à des adresses de réseau (72) spécifiques des stations (14) et les adresses logiques spécifiques des véhicules (12) correspondent à des adresses de réseau (74) spécifiques des véhicules (12).

13. Système de stockage et de préparation de commandes (10) comprenant un contrôleur de système, une pluralité de véhicules et une pluralité de stations fixes (14) rattachées à un emplacement ; chacune des stations (14) se trouvant à un emplacement différent connu à l'avance au sein du système de stockage et de préparation de commandes (10), une adresse d'emplacement spécifique (54) étant attribuée à chacun des emplacements connus à l'avance, une zone de déplacement au sein du système de stockage et de préparation de commandes (10), dans laquelle les véhicules (12) sont autorisés à se déplacer, étant attribuée à chacune des adresses d'emplacement spécifiques (54) ; chacune des stations (14) étant conçue pour générer un signal d'état spécifique (76) et pour communiquer le signal d'état spécifique (76) au contrôleur de système (16), le signal d'état spécifique (76) représentant un état de la station correspondante (14), et l'état de la station correspondante (14) changeant en raison d'une interaction entre l'un des véhicules (12) et la station correspondante (14) ; chacune des stations (14) possédant un identifiant de station spécifique, lequel correspond à une adresse logique spécifique ; chaque véhicule (12) possédant un contrôleur de véhicule (36) et un identifiant de véhicule spécifique (52) qui correspond à une adresse logique spécifique, et le contrôleur de système (16) étant conçu pour mettre en oeuvre le procédé selon l'une des revendications précédentes.
